# EUROPEAN PATENT SPECIFICATION

(11) **EP 2 344 350 B1**
(45) Date of publication and mention of the grant of the patent: **02.01.2013**
(21) Application number: 08876084.8
(22) Date of filing: 31.10.2008
(51) Int. Cl.: B60C 11/04, B60C 11/13

(54) **TYRE FOR VEHICLE WHEELS**
FAHRZEUGLUFTREIFEN
PNEUMATIQUE DESTINÉ À DES ROUES DE VÉHICULE

(43) Date of publication of application: 20.07.2011
(73) Proprietor: Pirelli Tyre S.P.A., 20126 Milan (IT)
(72) Inventor: MONTANARO, Fabio, I-20126 Milano (MI) (IT)
(74) Representative: Brasca, Marco
(86) International application number: PCT/IT2008/000680
(87) International publication number: WO 2010/049959

(56) References cited:
- JP-A- 2006 168 571
- US-A1- 2002 157 749
- US-A1- 2008 078 487

## Description

The present invention relates to a tyre for vehicle wheels.

More particularly, the invention pertains to a tyre for wheels of trucks of the urban or suburban type, designed to run on asphalt-paved roads for most of their operating life, but also on partially asphalt-paved roads or on unmade roads.

In particular, when running on the last-mentioned type of roads (unmade or partly asphalt-paved roads) and/or when manoeuvring in large goods-sorting squares where fine gravel or small stones are present, some stones or gravel may get caught in the longitudinal and transverse grooves of the tread band. Due to the groove width, included between about 8 and 20 mm, the stones easily enter said grooves being pushed by the pressure exerted by the footprint contacting the road, and remain then entrapped therein. In fact, during rolling, the centrifugal force by itself is not able to eject them.

During the subsequent running on compact asphalt or cement-paved road surfaces, the cyclic deformation of the tyre in the contact region with the ground (ground-contacting footprint) pushes the stones against the bottom and sides of the groove where they are entrapped, which may trigger tearing of the elastomeric material (which phenomenon is known as "stone drilling"). Drilling of the elastomeric material can degenerate and give rise to formation of wide cracks reaching the first belt band of the tyre. Under this situation it is necessary to remove and repair or replace the tyre.

To partly obviate this drawback, protrusions referred to in the particular sector as "stone-shooting" elements are known to be formed at the bottom of the tread grooves, which protrusions are adapted to prevent the stones from being entrapped and to help ejection of same.

Document EP1810849A1 discloses a tyre provided with protrusions disposed within a groove at intervals. Each protrusion is less extended in height than the blocks delimiting the groove and is separated by said blocks. Each protrusion comprises a main portion having a top and a sloping portion with a ramp forming an angle with the groove bottom that is included between 3° and 60°. A stone entrapped in the groove moves upwards on the ramp and is ejected from the groove.

Document US 2008078487, corresponding with the preamble of claim 1, discloses that a groove bottom of a circumferential groove formed in a tread surface is provided with a protruding stripe extending along a next ending direction of the circumferential groove. The protruding stripe is provided with a top head portion protruding toward a tire outer circumferential side, and a base portion which is narrower than the top head portion and connects the top head portion and the groove bottom. If a small stone is pinched, the top head portion is inclined around the base portion, and the protruding stripe is deflected as a whole, thereby generating a reaction force on the basis of a deformation restoring force.

Document US 2002157749 discloses a pneumatic tire which includes a tread having a plurality of spaced tread blocks separated by grooves or slots. A plurality of tie bars extend across the grooves or slots between adjacent tread blocks. The tie bars have a pair of sidewalls and a top surface with an undercut formed in at least one of the sidewalls to reduce tie bar stiffness and provide increased water evacuation as the tread wears. The top surface of the tie bar is lower than the top surfaces of the adjacent tread block and the undercut can be formed in only one or both sidewalls of the tie bar and have various stepped and tapered configurations.

The Applicant has noticed that the tapering or constant-section shape of known protrusions used for ejecting the entrapped stones does not offer an end or top surface to the stone that is wide enough to efficiently perform its task. In fact, the stone succeeds in penetrating between the protrusion and side wall of the groove and remains entrapped therein.

The Applicant has also noticed that creation of protrusions tapering towards the upper end and provided with extended top surfaces involves a reduction in the space lying between the base of this protrusion and the side walls of the groove. As a result, also the connecting radii between said side walls and the groove bottom must be decreased, which will bring about worsening of the resistance to fatigue of the tyre. In fact the Applicant has seen that the repeated tyre deformation at the ground-contacting footprint during rolling causes arising of fatigue phenomena that are above all concentrated in the tread angles delimited, for example, by said side walls and the groove bottom.

The Applicant has realised that it is possible to increase the contact surface between the protruding elements and the stones and at the same time also increase said connecting radii by making protruding elements provided with a base size at the groove bottom that is smaller than the top size.

More particularly, the present invention relates to a tyre for vehicle wheels, comprising:
- a tread band having a tread pattern and a plurality of grooves;
- a plurality of elements protruding from a bottom surface of said grooves;
wherein the height of said protruding elements is less extended than the depth of said grooves;
wherein said protruding elements have a proximal portion placed close to the bottom surface, and a distal portion;
wherein the proximal portion comprises a radially more internal surface smaller than a radially more external surface of the distal portion.

The invention as claimed enables manufacture of tyres capable of efficiently counteracting stone entrapping. In fact, the top of the protruding elements made in accordance with the invention offers a wide rest surface for the stones entering the groove, preventing said stones from reaching the groove bottom.

In addition, tapering of the protruding element towards the attachment region placed at the groove bottom gives the same a great lateral flexibility. When the stone pushes against the top, it laterally bends the protruding element and the subsequent spring return of the latter tending to recover its undeformed configuration helps in moving the stone away from the bottom and in ejecting it from the groove.

The present invention can further have one or more of the preferred features hereinafter described.

Preferably, the proximal portion has a smaller axial extension than the axial extension of the distal portion in a radial section of the protruding element.

The wide rest surface and bending of the protruding element taking place towards one of the side walls of the groove and bringing the top against said side wall prevents the stones from sticking between the protruding element and the side wall.

In addition, the reduced size of the attachment region of the protruding element, at the groove bottom, allows the connecting radii between the bottom surface and side walls of the groove to be increased, so that as a result it is reduced the risk of tearing occurring in this region due to fatigue phenomena. Therefore, the protruding elements can be also positioned in the grooves located on the tyre shoulders, at which the fatigue phenomena are more marked.

Alternatively or in addition, the proximal portion has a circumferential extension smaller than the circumferential extension of the distal portion in a circumferential section of the protruding element.

In accordance with a preferred embodiment, the protruding element comprises a stem linked to the bottom surface and two tailpieces extending in mutually opposite directions from a distal end of the stem.

In addition, preferably, the tailpieces delimit a recess between them that is disposed on the distal portion.

Preferably, the protruding element has a T-shaped radial section.

Preferably, the protruding element has an Y-shaped radial section.

These configurations enable easy disengagement of the tyre from the mould during the vulcanisation step, because the protruding elements are free to become deformed through mutual approaching of their tailpieces, eliminating the undercuts defined by said tailpieces, during removal.

The protruding element has a maximum width "s" and a minimum width "b" measured in the radial section and the "b/s" ratio is smaller than 1. Preferably, the "b/s" ratio is smaller than about 0.8. In addition, the "b/s" ratio is greater than about 0.2. For instance, the "b/s" ratio is equal to about 0.4.

The stated ratios optimise the compromise between flexibility and strength of the protruding element.

Preferably, the groove has a depth "H" and the protruding element has a height "h", and the "h/H" ratio is smaller than 1. Preferably, the "h/H" ratio is smaller than about 0.85. In addition, the "h/H" ratio is greater than about 0.2. For instance, the "h/H" ratio is equal to about 0.4.

The stated ratios enable the tyre performance ascribable to the tread (such as traction power and grip on unmade roads, draining capability) to be optimised, while at the same time allowing the protruding "stone-shooting" elements to work efficiently.

The protruding element has a maximum width "s" and the groove has a maximum width "l" measured in the radial section and the "s/l" ratio is smaller than 1. Preferably, the "s/l" ratio is smaller than about 0.7. In addition, preferably, the "s/l" ratio is greater than about 0.2. More preferably, the "s/l" ratio is greater than about 0.5.

The stated ratios optimise the compromise between the lateral elastic mobility of the protruding element and the extension of the top surface offered to the stones.

According to a preferred embodiment, the protruding elements are mutually aligned along the longitudinal extension of the groove and mutually spaced apart by a distance "d".

Preferably the protruding element has a length "L" measured along the longitudinal extension of the groove and the "d/L" ratio is smaller than about 2, more preferably the "d/L" ratio is smaller than about 1.

In addition, preferably the "d/L" ratio is greater than about 0.1, more preferably the "d/L" ratio is greater than about 0.5.

Preferably, the groove is a circumferential groove and the tread pattern has a pitch "P", the protruding element has a length "L" measured along the longitudinal extension of the groove and the "L/P" ratio is smaller than about 0.7; more preferably, the "L/P" ratio is smaller than about 0.2.

Furthermore, preferably the "L/P" ratio is greater than about 0.05; more preferably the "L/P" ratio is greater than about 0.07.

Preferably, the number of the protruding elements per pitch "P" is smaller than 10.

Furthermore, preferably the number of the protruding elements per pitch "P" is greater than or equal to 1; more preferably it is 4. Most preferably, the number of the protruding elements per pitch P" is smaller than 8.

These features enable the protruding elements to deform and to better fit the stone shape so that they can work without being damaged too much.

Preferably, the protruding element has a minimum width "b" and the groove has a minimum width "q" measured in the radial section and the "b/q" ratio is smaller than about 0.6, more preferably it is 0.4.

In addition, preferably the "b/q" ratio is greater than about 0.1, more preferably it is 0.2.

Restriction in the width of the protruding elements at the foot allows connections to be made that are wide enough to reduce arising of dangerous fatigue phenomena.

Preferably, the groove in radial section has a connecting radius between the bottom surface and the side walls that is greater than 3 mm. More preferably, the connecting radius is greater than 5 mm.

Further features and advantages will become more apparent from the detailed description of a preferred, but not exclusive, embodiment of a tyre for vehicle wheels in accordance with the present invention.

This description will be set out hereinafter with reference to the accompanying drawings, given by way of non-limiting example, in which:

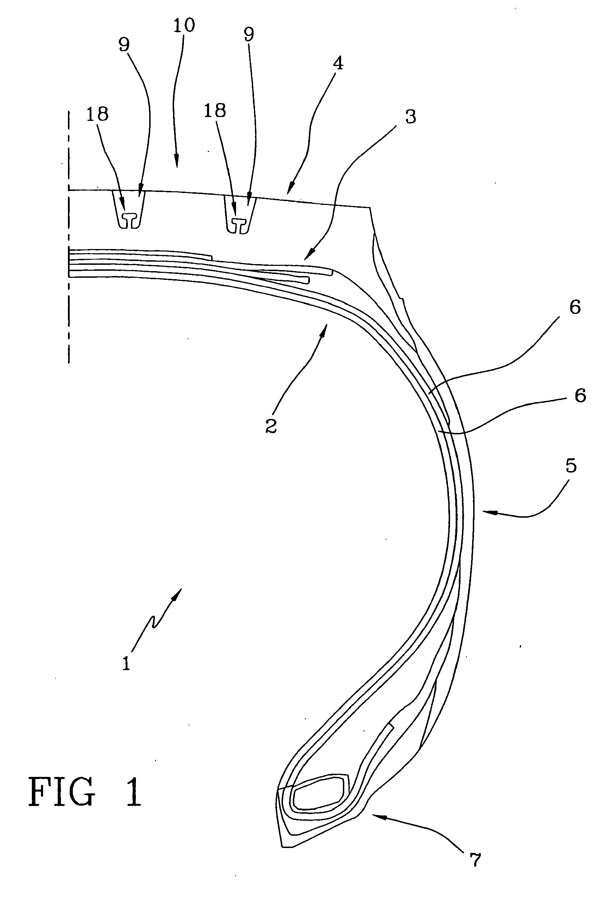

- Fig. 1 is a partial diametrical section view of a tyre in accordance with the present invention;
- Fig. 2 is a fragmentary plan view showing a tread band belonging to the tyre seen in Fig. 1;
- Fig. 3 shows an enlarged portion of the tyre seen in Fig. 1 illustrating a protruding element in accordance with the present invention;
- Fig. 4 shows a first alternative embodiment of the protruding element seen in Fig. 3;
- Fig. 5 shows a second alternative embodiment of the protruding element seen in Fig. 3;
- Fig. 6 shows a third alternative embodiment of the protruding element seen in Fig. 3.

With reference to the drawings, a tyre for vehicle wheels in accordance with the present invention is denoted at 1. Tyre 1 herein shown is suitable for use on truck wheels of the urban/suburban type.

Tyre 1 comprises a carcass structure 2 of substantially toroidal conformation, a belt structure 3 circumferentially extending around the carcass structure 2, a tread band 4 applied at a circumferentially external position to the belt structure 3 and a pair of sidewalls 5 laterally applied to the carcass structure 2 on opposite sides thereof and each extending from a side edge of the tread band 4 until close to a radially internal edge of the carcass structure 2. Each of the sidewalls 5 and the tread band 4 essentially comprises at least one layer of elastomeric material of suitable thickness.

To the aims of the present invention, it is to be pointed out that by the term "elastomeric material" it is intended a composition comprising at least one elastomeric polymer and at least one reinforcing filler. Preferably, this composition further comprises additives such as cross-linking agents and/or plasticizers, for example. Due to the presence of the cross-linking agents, this material can be cross-linked by heating, so as to form the final article of manufacture.

The carcass structure 2 comprises one or more carcass plies 6 having axially opposite end flaps that are steadily linked to a pair of annular anchoring structures 7, integrated into the regions usually identified as "beads". The carcass ply 6 can be fully coated with a so-called "liner", i.e. a thin layer of an elastomeric material impervious to air or to other inflating fluids usually introduced into the tyre in use, which extends over the whole extension of the radially internal surface 1a of tyre 1.

Formed on a radially external surface of the tread band 4 of tyre 1 is a series of cuts 8a, 8b and longitudinal and/or transverse grooves 9 suitably disposed so as to form the desired "tread pattern" 10.

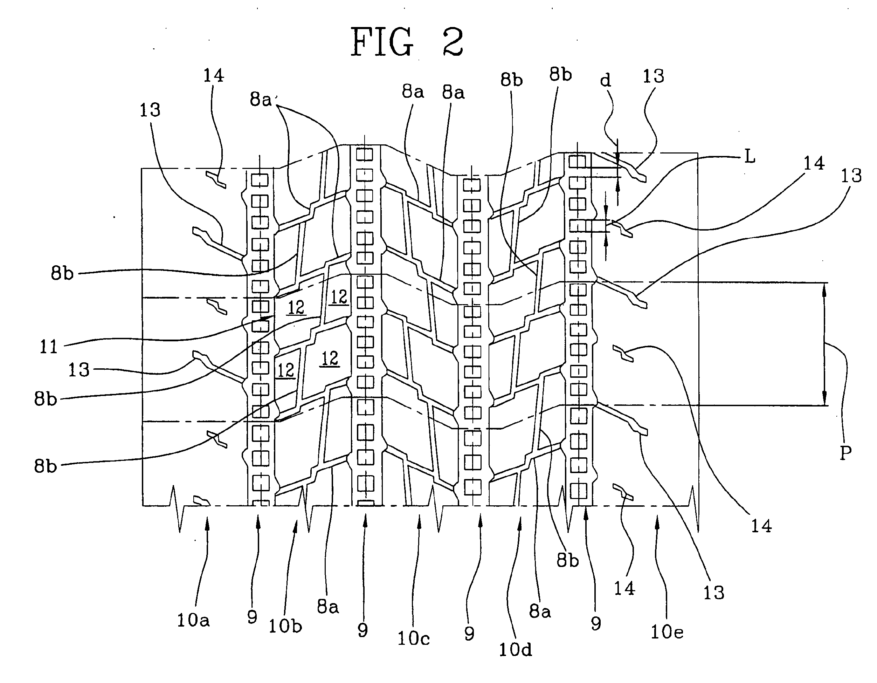

As illustrated in Fig. 2, the tread pattern 10, shown by way of non-limiting example, comprises five circumferential portions 10a, 10b, 10c, 10d, 10e disposed axially in side by side relationship and axially delimited by four circumferential grooves 9.

In each of three central circumferential portions 10b, 10c, 10d the tread pattern 10 is essentially defined by a geometric module 11 repeated along a circumferential extension direction of tyre 1. Each geometric module 11 extends along said circumferential extension direction over a pitch "P".

It is pointed out that the term "geometric module" in the present specification means a predetermined portion of tread pattern substantially repeated in succession and always the same along the whole circumferential extension of the tread band.

The modules, while keeping the same pattern configuration, can however have different circumferential lengths and they follow each other in a predetermined sequence along the circumferential extension of the tyre, so as to distribute the rolling noise on a wider frequency spectrum, according to a predetermined so-called "pitch sequence". In more detail, each of the three central circumferential portions 10b, 10c, 10d has a plurality of substantially transverse cuts 8a extending from a groove 9 to the other through the whole width of the respective circumferential portion 10b, 10c, 10d. The transverse cuts 8a can be inclined relative to an axial direction. In the example shown in Fig. 2, each of them is defined by two or three straight segments connected to each other by means of a connecting segment substantially oriented in the circumferential direction. Two-segment transverse cuts 8a are alternated with three-segment transverse cuts 8a along the circumferential extension.

One or more of the three central circumferential portions 10b, 10c, 10d can further have substantially longitudinal cuts 8b connecting two transverse cuts 8a in succession. The longitudinal cuts 8b can be inclined to a circumferential direction. In the embodiment shown, a single longitudinal cut 8b connects two transverse cuts 8a in succession and the aforesaid longitudinal cuts 8b are out of alignment with each other. Each longitudinal cut 8b is the extension of a connecting segment belonging to one of the three-segment transverse cuts 8a.

Each geometric module 11 is delimited by circumferential grooves 9 and by a pair of three-segment transverse cuts 8a in succession. The geometric module 11 further has a two-segment transverse cut 8a and two longitudinal cuts 8b dividing it into four blocks 12.

The two lateral circumferential portions or shoulder portions 10a, 10e have a series of shoulder cuts 13 that can extend from the axially external circumferential grooves 9 to about half the width of the respective circumferential portion 10a, 10e. A series of notches 14 can be alternated with the shoulder cuts 13. In the embodiment in Fig. 2, notches 14 do not extend until groove 9. For each pitch "P" the tread band 4 has one notch 14 and one shoulder cut 13.

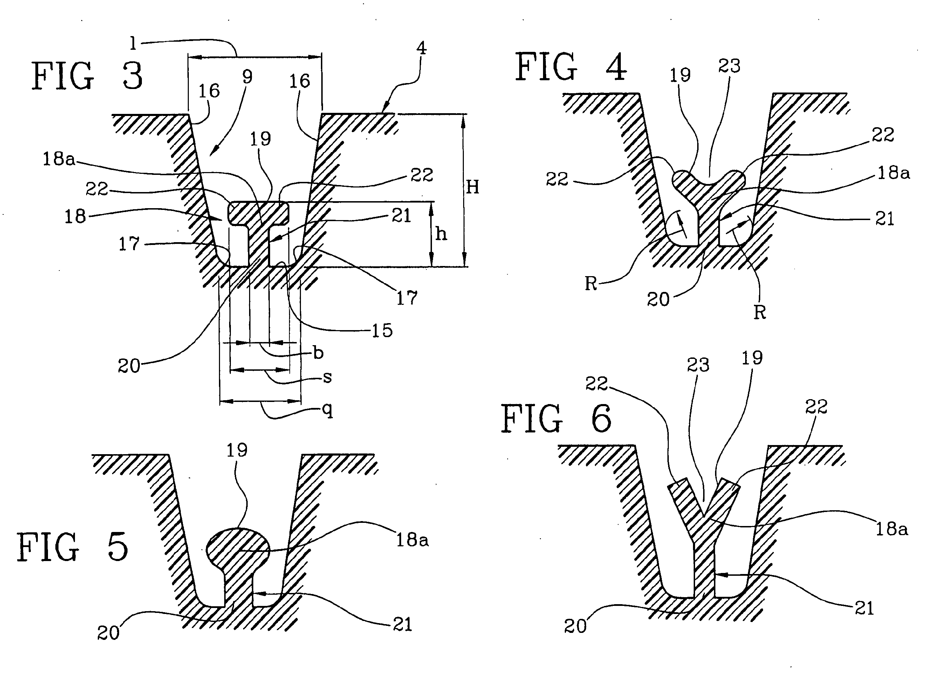

Each circumferential groove 9 has (Fig. 3) a depth "H" included between 10 mm and 30 mm, and a width "1" included between 8 mm and 20 mm, preferably between 13 mm and 16 mm, measured on an outer rolling surface of the thread band 4.

Cuts 8a, 8b, 13, 14 have a depth preferably less extended than that of grooves 9, just as an indication in the range of 2 mm to 10 mm, and a width, just as an indication, in the range of 2 to 10 mm, preferably smaller than that of grooves 9.

Referring to Figs. 3-6, each groove 9 has a bottom surface 15 and two side walls 16 connecting said bottom surface 15 to the outer rolling surface of the tread band 4. Typically, the side walls 16 diverge from each other starting from the bottom surface 15 towards the outer surface. The width "q" of groove 9 measured on the groove bottom is preferably included between about 6 mm and about 16 mm. As shown in Fig. 3, since the bottom surface 15 is connected to the side walls 16 by means of connecting surfaces 17, this width "q" (minimum width of groove 9) is measured between the intersections of the planes in which the side walls 16 lie and the plane in which the bottom surface 15 lies. Radius "R" of said connecting surfaces 17 (Fig. 4) is preferably included between about 3 mm and about 5 mm. In one or more of grooves 9, preferably in all of them, a plurality of protruding elements 18 in elastomeric material is disposed; they are mutually aligned along the circumferential extension of groove 9 (as shown in Fig. 2) and radially extend from the bottom surface 15 (as clearly shown in Figs, 1 and 3-6).

Each of the protruding elements 18 comprises a distal portion 18a provided with a radially external top 19 designed to come into contact with the stones entering said groove 9.

The height "h" of the protruding element 18, measured from the bottom surface 15 along a direction orthogonal to the rolling surface and substantially coincident with a radial direction, is smaller than the depth of groove 9 and preferably included between about 5 mm and about 25 mm. The ratio between the height "h" of the protruding element 18 and the depth "H" of groove 9 is smaller than 1, preferably included between about 0.2 and about 0.85 and more preferably between about 0.4 and about 0.85.

Each of the protruding elements 18 has a divergent shape starting from a proximal portion 20 placed close to the bottom surface 15 and connected thereto, towards top 19. By the term "divergent shape" it is intended that the proximal portion 20 is smaller than the distal portion 18a or, in other words, that the protruding element 18 grows bigger starting from its proximal portion 20 towards top 19. Therefore, the proximal portion 20 comprises a radially more internal surface, intended as the surface of a section of said proximal portion 20 transverse to its radial extension, smaller than a radially more external surface of the distal portion 18a. The radially more external surface of the distal portion 18a is the surface of a section of said distal portion 18a transverse to the radial extension of the protruding element 18.

Preferably, this divergent shape is obtained in a section transverse to groove 9 that in the preferred embodiment herein illustrated is coincident with a radial section of tyre 1. In accordance with alternative embodiments not shown, the protruding element 18 can be only or also divergent in a longitudinal section of said groove 9 that in the embodiments shown is coincident with a circumferential section of tyre 1 (formed in a plane parallel to the equatorial plane of tyre 1).

For instance, the protruding element 18 can have the shape of a trunk of a cone or a trunk of a pyramid or can have a T-shaped or Y-shaped conformation.

In more detail, the protruding element 18 comprises a stem 21 which is linked to and extends from the bottom surface 15 and two tailpieces 22 extending in mutually opposite directions from a distal end of stem 21. The two tailpieces 22 define the distal portion 18a, carry top 19 and extend towards the side walls 16 of groove 9 without however touching them, at least in the undeformed position of the protruding element 18.

In accordance with the embodiment in Fig. 3, the radial section of the protruding element 18 has a T-shaped conformation and top 19 is a flat surface carried by the two tailpieces 22 substantially extending along an axial direction of tyre 1.

In accordance with the embodiments in Figs. 4 and 6, the radial section of the protruding element 18 has an Y-shaped conformation, the two tailpieces 22 are inclined relative to the axial direction and, in addition, delimit a recess 23 between them.

In the embodiment shown in Fig. 5 the top surface 19 has a convex shape.

The protruding element 18 has a maximum width "s" at its tailpieces 22 and a minimum width "b" at stem 21 (both measured along a direction tangent to the rolling surface of tread 4, which in the embodiment shown is substantially coincident with an axial direction related to tyre 1). The "b/s" ratio is smaller than 1 and preferably included between about 0.2 and about 0.8, more preferably between about 0.4 and about 0.8.

The ratio between the maximum width "s" of the protruding element 18 and the maximum width "l" of groove 8 is smaller than 1, preferably in the range of between about 0.2 and about 0.7, more preferably in the range of between about 0.5 and about 0.7.

In addition, the ratio between the minimum width "b" of the protruding element 18 and the minimum width "q" of groove 9 is preferably included between about 0.1 and about 0.6, more preferably between about 0.2 and about 0.4.

The protruding elements 18 are mutually spaced apart along the longitudinal extension of groove 9 by a distance "d" and each have a length "L" (Fig. 2). Distance "d" is preferably included between about 5 mm and about 20 mm and length "L" is preferably included between about 10 mm and about 30 mm. The "d/L" ratio is preferably in the range of about 0.1 to about 2 and more preferably in the range of between about 0.5 and about 1.

The ratio between length "L" and pitch "P" is included between about 0.05 and about 0.7, more preferably between about 0.07 and about 0.5.

In addition, the number "n" of protruding elements 18 per pitch "P" is included between 1 and 10 and preferably between 4 and 8.

In an alternative embodiment not shown, the protruding element 18 may also be one alone for each groove 9, forming a continuous body extending over the whole circumferential extension of said groove 9.

## Claims

1. A tyre for vehicle wheels, comprising:
- a tread band (4) having a tread pattern (10) and a plurality of grooves (9);
- a plurality of elements (18) protruding from a bottom surface (15) of said grooves (9);
wherein the height (h) of said protruding elements is less extended than the depth (H) of said grooves (9); wherein said protruding elements (18) have a proximal portion (20) placed close to the bottom surface (15), and a distal portion (18a);
wherein the proximal portion (20) comprises a radially more internal surface smaller than a radially more external surface of the distal portion (18a);
wherein each protruding element (18) is provided with lateral flexibility so that, when a stone pushes against said protruding element (18), the stone laterally bends the protruding element (18) and a subsequent spring return of the latter tending to recover its undeformed configuration helps in moving the stone away from the bottom surface (15) and in ejecting it from the groove (9);
**characterized in that** the protruding element (18) comprises a stem (21) linked to the bottom surface (15) and two tailpieces (22) extending in mutually opposite directions from a distal end of the stem (21).

2. A tyre as claimed in the preceding claim, wherein the proximal portion (20) has a smaller axial extension than the axial extension of the distal portion (18a) in a radial section of the protruding element (18).

3. A tyre as claimed in claim 1 or 2, wherein the proximal portion (20) has a circumferential extension smaller than the circumferential extension of the distal portion (18a) in a circumferential section of the protruding element (18).

4. A tyre as claimed in claim 1, wherein the tailpieces (22) delimit a recess (23) between them that is disposed on the distal portion (18a).

5. A tyre as claimed in claim 2, wherein the protruding element (18) has a maximum width "s" and a minimum width "b" measured in the radial section, and wherein the "b/s" ratio is smaller than 1.

6. A tyre as claimed in claim 5, wherein the "b/s" ratio is greater than about 0.2.

7. A tyre as claimed in claim 1, wherein the groove (19) has a depth "H" and the protruding element (18) has a height "h", and wherein the "h/H" ratio is smaller than 1.

8. A tyre as claimed in claim 7, wherein the "h/H" ratio is greater than about 0.2.

9. A tyre as claimed in claim 2, wherein the protruding element (18) has a maximum width "s" and the groove (9) has a maximum width "l" measured in the radial section, and wherein the "s/l" ratio is smaller than 1.

10. A tyre as claimed in claim 9, wherein the "s/l" ratio is greater than about 0.5.

11. A tyre as claimed in claim 1, wherein the protruding elements (18) are mutually aligned along the longitudinal extension of the groove (9) and mutually spaced apart by a distance "d".

12. A tyre as claimed in claim 11, wherein the protruding element (18) has a length "L" measured along the longitudinal extension of the groove (9), and wherein the "d/L" ratio is smaller than about 2.

13. A tyre as claimed in claim 11, wherein the protruding element (18) has a length "L" measure along the longitudinal extension of the groove (9), and wherein the "d/L" ratio is greater than about 0.1.

14. A tyre as claimed in claim 11, wherein the groove (9) is a circumferential groove and the tread pattern (10) has a pitch "P", wherein the protruding element (18) has a length "L" measured along the longitudinal extension of the groove (9), and wherein the "L/P" ratio is smaller than about 0.7.

15. A tyre as claimed in claim 11, wherein the groove (9) is a circumferential groove and the tread pattern (10) has a pitch "P", wherein the protruding element (18) has a length "L" measured along the longitudinal extension of the groove (9), and wherein the "L/P" ratio is greater than about 0.05.

16. A tyre as claimed in claim 11, wherein the groove (9) is a circumferential groove and the tread pattern (10) has a pitch "P", wherein the number of the protruding elements (18) per pitch "P" is smaller than 10.

17. A tyre as claimed in claim 11, wherein the groove (9) is a circumferential groove and the tread pattern (10) has a pitch "P", wherein the number of the protruding elements (18) per pitch "P" is greater than or equal to 1.

18. A tyre as claimed in claim 2, wherein the protruding element (18) has a minimum width "b" and the groove (9) has a minimum width "q" measured in the radial section, and wherein the "b/q" ratio is smaller than about 0.6.

19. A tyre as claimed in claim 2, wherein the protruding element (18) has a minimum width "b" and the groove (9) has a minimum width "q" measured in the radial section, and wherein the "b/q" ratio is greater than about 0.1.

20. A tyre as claimed in claim 2, wherein the groove (9) in radial section has a connecting radius (R) between the bottom surface (15) and the side walls (16) that is greater than 3 mm.

## Patentansprüche

1. Reifen für Fahrzeugräder, der aufweist:
- ein Laufflächenband (4), das ein Laufflächenprofil (10) und mehrere Rillen (9) aufweist;
- mehrere Elemente (18), die von einer Bodenfläche (15) der Rillen (9) hervorstehen;
wobei die Höhe (h) der vorstehenden Elemente sich weniger stark erstreckt als die Tiefe (H) der Rillen (9) ;
wobei die vorstehenden Elemente (18) einen nahen Abschnitt (20), der in der Nähe der Bodenfläche (15) vorgesehen ist, und einen entfernten Abschnitt (18a) aufweisen;
wobei der nahe Abschnitt (20) eine radial weiter innen liegende Fläche aufweist, die kleiner als eine radial weiter außen liegende Fläche des entfernten Abschnitts (18a) ist;
wobei jedes vorstehende Element (18) lateral flexibel ist, so dass, wenn ein Stein gegen das vorstehende Element (18) drückt, der Stein das vorstehende Element (18) lateral verformt und eine anschließende Federrückstellung des letzteren, wobei dessen unverformter Zustand tendenziell rückgängig gemacht wird, dabei hilft, den Stein von der Bodenfläche (15) wegzubewegen und diesen aus der Rille (9) zu entfernen;
**dadurch gekennzeichnet, dass** das vorstehende Element (18) einen Schaft (21), der mit der Bodenfläche (15) verbunden ist, und zwei Schlussstücke (22) aufweist, die sich in entgegengesetzter Richtung von einem entfernten Ende des Schafts (21) erstrecken.

2. Reifen nach Anspruch 1, bei dem der nahe Abschnitt (20) eine kleinere axiale Erstreckung als der entfernte Abschnitt (18a) in einem radialen Bereich des vorstehenden Elements (18) aufweist.

3. Reifen nach Anspruch 1 oder 2, bei dem der nahe Abschnitt (20) eine Umfangserstreckung aufweist, die kleiner als die Umfangserstreckung des entfernten Abschnitts (18a) in einem Umfangsbereich des vorstehenden Elements (18) ist.

4. Reifen nach Anspruch 1, bei dem die Schlussstücke (22) eine Aussparung (23) zwischen diesen begrenzen, die an dem entfernten Abschnitt (18a) angeordnet ist.

5. Reifen nach Anspruch 2, bei dem das vorstehende Element (18) eine maximale Breite "s" und eine minimale Breite "b" gemessen in dem radialen Bereich aufweist, und wobei das Verhältnis "b/s" kleiner als 1 ist.

6. Reifen nach Anspruch 5, bei dem das Verhältnis "b/s" größer als ungefähr 0,2 ist.

7. Reifen nach Anspruch 1, bei dem die Rille (19) eine Tiefe "H" aufweist und das vorstehende Element (18) eine Höhe "h" aufweist, und wobei das Verhältnis "h/H" kleiner als 1 ist.

8. Reifen nach Anspruch 7, bei dem das Verhältnis "h/H" größer als ungefähr 0,2 ist.

9. Reifen nach Anspruch 2, bei dem das vorstehende Element (18) eine maximale Breite "s" aufweist und die Rille (9) eine maximale Breite "l" aufweist, gemessen in dem radialen Bereich, und wobei das Verhältnis "s/l" kleiner als 1 ist.

10. Reifen nach Anspruch 9, bei dem das Verhältnis "s/l" größer als ungefähr 0,5 ist.

11. Reifen nach Anspruch 1, bei dem die vorstehenden Elemente (18) entlang der Längserstreckung der Rille (9) gegenseitig ausgerichtet sind und um einen Abstand "d" voneinander beabstandet sind.

12. Reifen nach Anspruch 11, bei dem das vorstehende Element (18) eine Länge "L" aufweist, gemessen entlang der Längserstreckung der Rille (9), und wobei das Verhältnis "d/L" kleiner als ungefähr (2) ist.

13. Reifen nach Anspruch 11, bei dem das vorstehende Element (18) eine Länge "L" aufweist, gemessen entlang der Längserstreckung der Rille (9), und wobei das Verhältnis "d/L" größer als ungefähr 0,1 ist.

14. Reifen nach Anspruch 11, bei dem die Rille (9) eine Umfangsrille ist und das Laufflächenprofil (10) einen Strukturabstand "P" aufweist, wobei das vorstehende Element (18) eine Länge "L" aufweist, gemessen entlang der Längserstreckung der Rille (9), und wobei das Verhältnis "L/P" kleiner als ungefähr 0,7 ist.

15. Reifen nach Anspruch 11, bei dem die Rille (9) eine Umfangsrille ist und das Laufflächenprofil (10) einen Strukturabstand "P" aufweist, wobei das vorstehende Element (18) eine Länge "L" aufweist, gemessen entlang der Längserstreckung der Rille (9), und wobei das Verhältnis "L/P" größer als ungefähr 0,05 ist.

16. Reifen nach Anspruch 11, bei dem die Rille (9) eine Umfangsrille ist und das Laufflächenprofil (10) einen Strukturabstand "P" aufweist, wobei die Anzahl der vorstehenden Elemente (18) pro Strukturabstand "P" kleiner als 10 ist.

17. Reifen nach Anspruch 11, bei dem die Rille (9) eine Umfangsrille ist und das Laufflächenprofil (10) einen Strukturabstand "P" aufweist, wobei die Anzahl der vorstehenden Elemente (18) pro Strukturabstand "P" größer als oder gleich 1 ist.

18. Reifen nach Anspruch 2, bei dem das vorstehende Element (18) eine minimale Breite "b" aufweist und die Rille (9) eine minimale Breite "q" aufweist, gemessen in dem radialen Bereich, und wobei das Verhältnis "b/q" kleiner als ungefähr 0,6 ist.

19. Reifen nach Anspruch 2, bei dem das vorstehende Element (18) eine minimale Breite "b" aufweist und die Rille (9) eine minimale Breite "q" aufweist, gemessen in dem radialen Bereich, und wobei das Verhältnis "b/q" größer als ungefähr 0,1 ist.

20. Reifen nach Anspruch 2, bei dem die Rille (9) in dem radialen Bereich einen Verbindungsradius (R) zwischen der Bodenfläche (15) und den Seitenwänden (16) aufweist, der größer als 3 mm ist.

## Revendications

1. Pneumatique destiné à des roues de véhicules, comprenant :
- une bande de roulement (4) ayant des motifs de roulement (10) et plusieurs rainures (9) ;
- plusieurs éléments (18) faisant saillie d'une surface de fond (15) desdites rainures (9) ;
dans lequel la hauteur (h) desdits éléments saillants est moins étendue que la profondeur (H) desdites rainures (9) ;
dans lequel lesdits éléments saillants (19) ont une partie proximale (20) placée près de la surface de fond (15), et une partie distale (18a) ;
dans lequel la partie proximale (20) comprend une surface radialement plus interne qui est plus petite qu'une surface radialement plus externe de la partie distale (18a) ;
dans lequel chaque élément saillant (18) est pourvu d'une flexibilité latérale de manière que, lorsqu'une pierre pousse contre ledit élément saillant (18), la pierre courbe latéralement l'élément saillant (18) et un rappel élastique subséquent de l'élément saillant tendant à revenir à sa configuration non-déformée aide à éloigner la pierre de la surface de fond (15) et à l'éjecter de la rainure (9) ;
**caractérisé en ce que** l'élément saillant (18) comprend une tige (21) reliée à la surface de fond (15) et deux pièces de queue (22) s'étendant en des directions mutuellement opposées depuis une extrémité distale de la tige (21).

2. Pneumatique selon la revendication précédente, dans lequel la partie proximale (20) a une étendue axiale plus petite que l'étendue axiale de la partie distale (18a) dans une section radiale de l'élément saillant (18).

3. Pneumatique selon la revendication 1 ou 2, dans lequel la partie proximale (20) a une étendue circonférentielle plus petite que l'étendue circonférentielle de la partie distale (18a) dans une section circonférentielle de l'élément saillant (18).

4. Pneumatique selon la revendication 1, dans lequel les pièces de queue (22) délimitent entre elles un évidemment qui est disposée sur la partie distale (18a).

5. Pneumatique selon la revendication 2, dans lequel l'élément saillant (18) a une largeur maximale « s » et une largeur minimale « b » mesurées dans la section radiale, pneumatique dans lequel le rapport « b/s » est plus petit que 1.

6. Pneumatique selon la revendication 5, dans lequel le rapport « b/s » est plus grand qu'environ 0,2.

7. Pneumatique selon la revendication 1, dans lequel la rainure (19) a une profondeur « H » et l'élément saillant (18) a une hauteur « h », pneumatique dans lequel le rapport « h/H » est plus petit que 1.

8. Pneumatique selon la revendication 7, dans lequel le rapport « h/H » est plus grand qu'environ 0,2.

9. Pneumatique selon la revendication 2, dans lequel l'élément saillant (18) a une largeur maximale « s » et la rainure (9) a une largeur maximale « l » mesurées dans la section radiale, pneumatique dans lequel le rapport « s/l » est plus petit que 1.

10. Pneumatique selon la revendication 9, dans lequel le rapport « s/l » est plus grand qu'environ 0,5.

11. Pneumatique selon la revendication 1, dans lequel les éléments saillants (18) sont mutuellement alignés le long de l'étendue longitudinale de la rainure (9) et mutuellement espacés d'une distance « d ».

12. Pneumatique selon la revendication 11, dans lequel l'élément saillant (18) a une longueur « L » mesurée le long de l'étendue longitudinale de la rainure (9), pneumatique dans lequel le rapport « d/L » est plus petit qu'environ 2.

13. Pneumatique selon la revendication 11, dans lequel l'élément saillant (18) a une longueur « L » mesurée le long de l'étendue longitudinale de la rainure (9), pneumatique dans lequel le rapport « d/L » est plus grand qu'environ 0,1.

14. Pneumatique selon la revendication 11, dans lequel la rainure (9) est une rainure circonférentielle et le motif de roulement (10) a un pas « P », dans lequel l'élément saillant (18) a une longueur « L » mesurée le long de l'étendue longitudinale de la rainure (9), pneumatique dans lequel le rapport « L/P » est plus petit qu'environ 0,7.

15. Pneumatique selon la revendication 11, dans lequel la rainure (9) est une rainure circonférentielle et le motif de roulement (10) a un pas « P », dans lequel l'élément saillant (18) a une longueur « L » mesurée le long de l'étendue longitudinale de la rainure (9), pneumatique dans lequel le rapport « L/P » est plus grand qu'environ 0,05.

16. Pneumatique selon la revendication 11, dans lequel la rainure (9) est une rainure circonférentielle et le motif de roulement (10) a un pas « P », pneumatique dans lequel le nombre d'éléments saillants (18) par pas « P » est plus petit que 10.

17. Pneumatique selon la revendication 11, dans lequel la rainure (9) est une rainure circonférentielle et le motif de roulement (10) a un pas « P », pneumatique dans lequel le nombre d'éléments saillants (18) par pas « P » est plus grand ou égal à 1.

18. Pneumatique selon la revendication 2, dans lequel l'élément saillant (18) a une largeur minimale « b » et la rainure (9) a une largeur minimale « q » mesurées dans la section radiale, pneumatique dans lequel le rapport « b/q » est plus petit qu'environ 0,6.

19. Pneumatique selon la revendication 2, dans lequel l'élément saillant (18) a une largeur minimale « b » et la rainure (9) a une largeur minimale « q » mesurées dans la section radiale, pneumatique dans lequel le rapport « b/q » est plus grand qu'environ 0,1.

20. Pneumatique selon la revendication 2, dans lequel la rainure (9) dans une section radiale a entre la surface inférieure (15) et les parois latérales (16) un rayon de raccordement (R) qui est plus grand que 3 mm.
